# EUROPÄISCHE PATENTSCHRIFT

(11) **EP 3 832 344 B1**
(45) Veröffentlichungstag und Bekanntmachung des Hinweises auf die Patenterteilung: **02.04.2025**
(21) Anmeldenummer: 20209593.1
(22) Anmeldetag: 24.11.2020
(51) Int. Cl.: G01S 7/481, G01S 17/42

(54) **OPTOELEKTRONISCHER SENSOR UND VERFAHREN ZUR ERFASSUNG EINES OBJEKTS**
OPTOELECTRONIC SENSOR AND METHOD FOR DETECTING AN OBJECT
CAPTEUR OPTOÉLECTRONIQUE ET PROCÉDÉ DE DÉTECTION D'UN OBJET

(30) Priorität: 05.12.2019 DE 102019133096
(43) Veröffentlichungstag der Anmeldung: 09.06.2021
(73) Patentinhaber: SICK AG, 79183 Waldkirch (DE)
(72) Erfinder: Ringwald, Siegfried, 79215 Elzach (DE)

(56) Entgegenhaltungen:
- US-A1- 2015 293 224
- US-A1- 2015 346 340
- US-A1- 2019 064 632
- US-A1- 2019 265 574

## Beschreibung

Die Erfindung betrifft einen optoelektronischen Sensor und ein Verfahren zur Erfassung eines Objekts in einem Überwachungsbereich nach dem Oberbegriff von Anspruch 1 beziehungsweise 10.

Viele optoelektronische Sensoren arbeiten nach dem Tastprinzip, bei dem ein Lichtstrahl in den Überwachungsbereich ausgesandt und der von einem Objekt zurückgeworfene Lichtstrahl wieder empfangen wird, um dann das Empfangssignal elektronisch auszuwerten. Dabei wird oft die Lichtlaufzeit mit einem bekannten Phasen- oder Pulsverfahren gemessen, um den Abstand eines angetasteten Objekts zu bestimmen. Dieses Verfahren wird auch LIDAR (Light Detection And Ranging) genannt.

Um den Messbereich zu erweitern, kann einerseits der Abtaststrahl bewegt werden, wie dies in einem Laserscanner geschieht. Dort überstreicht ein von einem Laser erzeugter Lichtstrahl mit Hilfe einer Ablenkeinheit periodisch den Überwachungsbereich. Zusätzlich zu der gemessenen Abstandinformation wird aus der Winkelstellung der Ablenkeinheit auf die Winkellage des Objektes geschlossen, und damit ist der Ort eines Objektes in dem Überwachungsbereich in zweidimensionalen Polarkoordinaten erfasst.

Eine andere Möglichkeit zur Messbereichserweiterung besteht darin, zugleich mehrere Messpunkte mit mehreren Abtaststrahlen zu erfassen. Das lässt sich auch mit einem Laserscanner kombinieren, der dann nicht nur eine Überwachungsebene erfasst, sondern über eine Vielzahl von Überwachungsebenen einen dreidimensionalen Raumbereich.

Aus der EP 1 927 867 B1 ist ein optoelektronischer Mehrebenensensor für die Überwachung eines dreidimensionalen Raumbereichs bekannt. Der Sensor weist mehrere zueinander beabstandete Bildsensoren auf. Jedem Bildsensor kann eine Lichtquelle zugeordnet sein und mit deren Hilfe eine Entfernung über eine Pulslaufzeit oder ein Phasenverfahren bestimmt werden. Der Mehrebenensensor ist im Grunde als Vervielfachung einzelner Ebenensensoren aufgebaut und dadurch relativ sperrig.

In den meisten Laserscannern wird die Abtastbewegung durch einen Drehspiegel erreicht. Gerade bei Verwendung mehrerer Abtaststrahlen ist aber im Stand der Technik auch bekannt, stattdessen den gesamten Messkopf mit Lichtquellen und Lichtempfängern rotieren zu lassen, wie dies beispielsweise in DE 197 57 849 B4 beschrieben ist.

In allen beschriebenen Fällen der Mehrfachabtastung bedarf es einer Lichtquelle, die mehrere Lichtstrahlen mit ausreichender Leistung und Strahlqualität erzeugt. Die bekannten Lösungen, in denen lediglich einstrahlige Sendemodule vervielfältigt werden, sind jedoch zu aufwändig.

Aus der DE 101 56 282 A1 ist ein Entfernungsbildsensor bekannt, von dem über eine Sendeoptik eine Matrix zum Beispiel von Vertikal-Halbleiterlasern auf die darzustellende Szene abgebildet wird.

Die DE 10 2004 014 041 A1 offenbart ein Sensorsystem zur Hinderniserkennung, in dem ein Sensorkopf um seine Achse rotiert. In dem Sensorkopf befindet sich eine Laserzeile mit mehreren Einzellasern, die über eine Optik auf die Umgebung abgebildet wird

In der US 4 656 462 ist eine Vorrichtung zur Erfassung von Objekten beschrieben, die als Lichtquelle eine LED-Zeile aufweist, in deren Strahlweg eine Kollimatorlinse angeordnet ist, wodurch ein Lichtfächer entsteht.

Die angegebenen Vorrichtungen benutzen zum Abtasten eines ausgedehnten Überwachungsbereichs entweder eine Vielzahl von Lichtquellen oder eine Lichtquelle, deren Lichtstrahl den Überwachungsbereich durch Bewegung der Lichtquelle selbst oder mit Hilfe beweglicher Optiken wie beispielswiese rotierender Spiegel, abtastet. Die Verwendung mehrerer Lichtquellen bedeutet in der Regel einen erhöhten Platzbedarf für den Sensor. Bewegliche optische Anordnungen können beispielsweise anfällig gegenüber Erschütterungen sein, was nachteilig bei einer Verwendung im mobilen Einsatz in Fahrzeugen sein kann.

In der US 10 338 321 ist ein LIDAR Scanner offenbart, der mit einem Sendestrahl einen Überwachungsbereich ohne bewegliche optische Anordnungen unter Verwendung optischer Schalter abscannt. Hier wird der Überwachungsbereich jedoch nur mit einem Einzelstrahl abgetastet, eine Mehrfachabtastung ist nicht beschrieben.

Die US 2019/265574 A1 offenbart eine integrierte optische Strahllenkvorrichtung, die eine planare dielektrische Linse umfasst, die Strahlen von verschiedenen Ausgängen einer Strahlteileranordnung in verschiedene Richtungen innerhalb einer Linsenebene kollimiert. Die Strahlteileranordnung weist einen Eingang und N Ausgänge sowie log2N schaltbare Strahlteiler auf, wobei die Strahlteiler derart eingerichtet sind, dass jeweils nur ein Ausgang der Strahlteileranordnung Lichtstrahlen emittieren kann.

Die US 2019/064632 A1 beschreibt eine Vorrichtung zum Aussenden einer elektromagnetischen Wellenfront mit zumindest drei Emissionswellenleitern, von denen jeder einen geradlinigen Abschnitt mit einem oder mehreren Elementen zur Auskopplung von optischer Leistung aufweist, wobei jedem der geradlinigen Abschnitte ein Phasenverschiebungselement vorgelagert ist. Jedem der Phasenverschiebungselemente ist ein optischer Koppler vorgeordnet, wobei jeder optische Koppler ein einstellbares Kopplungsverhältnis aufweist mit dem Licht aus einen Einkopplungswellenleiter in das jeweilige Phasenverschiebungselement eingekoppelt wird. Das aus den Emissionswellenleitern ausgekoppelte Licht interferiert im Fernfeld und erzeugt dort einen Beleuchtungslichtfleck. Die optischen Koppler und Phasenschieber müssen dabei derart ausgeführt sein, dass die Kohärenz des ausgekoppelten Lichts erhalten bleibt.

Es ist daher Aufgabe der Erfindung, den Aufbau eines mehrstrahligen optoelektronischen Sensors zu vereinfachen.

Diese Aufgabe wird durch einen optoelektronischen Sensor und ein Verfahren zur Erfassung eines Objekts in einem Überwachungsbereich nach Anspruch 1 beziehungsweise 10 gelöst. Der erfindungsgemäße Sensor ist ein Mehrfachtaster, der unter Verwendung einer schaltbaren Strahlteileranordnung mit mindestens einer Lichtquelle mehrere voneinander beabstandete Sendelichtstrahlen aussenden kann. Die Sendelichtstrahlen sind nicht als Strahlen im Sinne der Strahlenoptik innerhalb eines größeren Lichtbündels zu verstehen, sondern als voneinander separierte Lichtbündel und somit vereinzelte Abtaststrahlen, die im Überwachungsbereich beim Auftreffen auf ein Objekt entsprechend vereinzelte, voneinander beabstandete Lichtflecken erzeugen. Ein zugehöriger Lichtempfänger ist in der Lage aus mehreren, aus unterschiedlichen Richtungen remittierten Lichtstrahlen mehrere Empfangssignale zu erzeugen, also beispielsweise indem je eine Photodiode je Sendelichtstrahl vorhanden ist, oder auf einem ortsaufgelösten Lichtempfänger einzelne Empfangselemente oder auch Pixel eines Bildsensors entsprechend gruppiert werden. Diese Empfangssignale werden ausgewertet, um Informationen über das Objekt zu gewinnen.

Die Erfindung geht von dem Grundgedanken aus, zur Aufspaltung des von der Lichtquelle ausgesendeten Lichts in mehrere Sendelichtstrahlen eine Strahlteileranordnung zu verwenden, wobei die Strahlteileranordnung mindestens einen Eingang zum Empfangen von Sendelicht und eine Vielzahl von Ausgängen zum Emittieren von Sendelicht aufweist. Die Zahl der Ausgänge ist dabei größer als die Zahl der Eingänge. Zum Aufteilen des Sendelichts auf die Ausgänge weist die Strahlteileranordnung wenigstens einen schaltbaren Strahlteiler auf.

Dabei sind als schaltbare Strahlteiler Elemente zu verstehen, die einen oder mehrere Strahleingänge sowie mehrere Strahlausgänge aufweisen, wobei ein oder mehrere der Strahlausgänge aktiviert werden können, so dass in den Strahleingang eintretendes Licht lediglich aus den aktivierten Strahlausgängen austritt.

Als schaltbare Strahlteiler werden schaltbare Wellenleiterkoppler verwendet, wie sie aus dem Bereich der Telekommunikationstechnik bekannt sind. Diese weisen sich durch Robustheit und kompakte Bauformen aus. Ein schaltbarer Wellenleiterkoppler weist im Wesentlichen zwei benachbarte Lichtleiterfasern auf, zwischen denen durch Anlegen einer Spannung ein elektrisches Feld aufgebaut werden kann. Wird am Eingang der ersten Faser Licht eingekoppelt und es liegt eine Spannung an, dann überträgt sich das Licht über ein evaneszentes Feld hin zur zweiten Faser und kann an deren Ende ausgekoppelt werden. Wenn keine Spannung anliegt, verbleibt das Licht in der ersten Faser und kann an deren Ende wieder ausgekoppelt werden. Üblicherweise werden schaltbare Wellenleiterkoppler als optische Schalter verwendet, wobei eingekoppeltes Licht entweder auf den einen ersten Ausgang oder auf einen zweiten Ausgang geschaltet wird. Die schaltbaren Wellenleiterkoppler sind als integrierte Optiken ausgelegt. Dies hat den Vorteil, dass auf bewegte optische Komponenten wie beispielsweise rotierende Spiegel verzichtet werden und somit ein robustes System realisiert werden kann.

Durch Kaskadierung mehrerer schaltbarer Strahlteiler in einer Strahlteileranordnung lässt sich das Licht einer Lichtquelle in nahezu beliebig viele Sendelichtstrahlen aufteilen, so dass je nach Ansteuerung der schaltbaren Strahlteiler ein oder mehrere Ausgänge der Strahlteileranordnung Sendelichtstrahlen aussenden. Die Anzahl der gleichzeitig Sendelichtstrahlen aussendenden, aktivierten Ausgänge ist dabei im Wesentlichen durch die benötigte Sendelichtleistung in den einzelnen Sendelichtstrahlen, der verfügbaren Lichtleistung der Lichtquelle und den Koppelverlusten zwischen den Strahlteilern gegeben.

Der Grad der Kopplung im Wellenleiterkoppler kann von folgenden Parametern abhängen: Abstand der Fasern zueinander, Länge der parallel zueinander liegenden Kopplungsbereiche, Wellenlänge des Sendelichts, Material zwischen den Fasern, Material der Fasern, angelegte Spannung. Bei der Verwendung von schaltbaren Wellenleiterkopplern besteht daher die Möglichkeit, bei Anlegen einer geeigneten Spannung beide Ausgänge gleichzeitig zu aktivieren um den Überwachungsbereich mit mehreren Sendelichtstrahlen gleichzeitig zu beleuchten. Dies hat den Vorteil, dass eine sequentielle Abtastung eines Überwachungsbereichs mit mehreren Sendelichtstrahlen erfolgen und somit eine erhöhte Abtastrate erzielt werden kann.

Übliche Schaltzeiten von schaltbaren Wellenleiterkopplern liegen im Bereich von 0,5 bis 5 MHz Damit ist ein schnelles Abscannen des Überwachungsbereichs möglich

In einer Ausführungsform der Erfindung weist der optoelektronischer Sensor eine Lichtquelle zum Aussenden von Sendelicht auf. Das Sendelicht wird in eine der Lichtquelle nachgeordneten Strahlteileranordnung eingekoppelt. Die Strahlteileranordnung weist mindestens einen Eingang zum Einkoppeln von Sendelicht und eine Vielzahl von Ausgängen zum Auskoppeln von Sendelicht auf, wobei die Anzahl der Ausgänge größer als die Anzahl der Eingänge ist. Die Strahlteileranordnung weist weiterhin mehrere schaltbare Strahlteiler zum Aufteilen des Sendelichts auf die Ausgänge auf. Die schaltbaren Strahlteiler können so angesteuert werden, dass das Sendelicht gleichzeitig auf mindestens zwei Ausgänge der Strahlteileranordnung aufgeteilt werden kann. Ausgänge, aus denen Sendelicht austritt, werden auch als aktivierte Ausgänge bezeichnet. Der optoelektronische Sensor kann weiterhin eine Sendeoptik zum Projizieren der Sendelichtstrahlen in einen Überwachungsbereich sowie einen Lichtempfänger mit vorgeordneter Empfangsoptik zum Empfangen von aus dem Überwachungsbereich remittierten Lichtstrahlen aufweisen. Vom Lichtempfänger erzeugte Empfangssignale können an eine Steuer- und Auswertungseinheit übermittelt werden. Zur Gewinnung von Informationen über ein Objekt im Überwachungsbereich kann die Steuer- und Auswertungseinheit aus den Empfangssignalen eine Lichtlaufzeit zwischen Aussenden der Sendelichtstrahlen und Empfangen der vom Objekt remittierten Lichtstrahlen berechnen und dadurch einen Abstand des Objekts zum Sensor bestimmen.

Zur Erzeugung einer Vielzahl von Ausgängen der Strahlteileranordnung können mehrere schaltbare Strahlteiler in mehreren Ebenen kaskadiert angeordnet werden, wobei jeweils die beiden Ausgänge eines schaltbaren Strahlteilers mit den Eingängen von nachfolgenden schaltbaren Strahlteilern verbunden werden können. Bei der Verwendung von Strahlteilern, die einen Eingangsstrahl auf zwei Ausgangsstrahlen aufteilen, erhält man somit bei n Ebenen 2ⁿ Ausgänge. Die Verbindung der schaltbaren Strahlteiler kann über optische Fasern, Wellenleiter oder im Freistrahl erfolgen.

In einer Ausführungsform können die Ausgänge der Strahlteileranordnung eindimensional in einer Linie angeordnet sein. Hochauflösende Linienscanner haben typischerweise ein Sichtfeld (Field Of View, FOV) von 60 Grad mit einer Winkelauflösung von 0,25 Grad, was sich vorteilhaft durch eine Strahlteileranordnung mit 240 linienförmig angeordneten Ausgängen realisieren lässt, also vier Ausgängen pro Grad Sichtfeld. Bei einfacheren Anwendungen sind häufig Winkelauflösungen von ein bis zwei Grad ausreichend, so dass die Anzahl der Ausgänge der Strahlteileranordnung entsprechend verringert werden kann. Ein Ausgang der Strahlteileranordnung kann also ein typisches Sichtfeld von höchstens zwei Grad, bevorzugt von höchstens einem Grad, besonders bevorzugt von höchstens 0,25 Grad abtasten.

In einer weiteren Ausführungsform können die Ausgänge der Strahlteileranordnung zweidimensional in einer Matrix angeordnet sein. Somit lässt sich ein zweidimensionaler Überwachungsbereich abtasten. Die Überlegungen zur vorteilhaften Anzahl von Ausgängen der Strahlteileranordnung gelten analog zum oben beschriebenen eindimensionalen Fall.

Die Steuer- und Auswertungseinheit kann dazu eingerichtet sein, jeden schaltbaren Strahlteiler einzeln anzusteuern, insbesondere für jeden schaltbaren Strahlteiler ein individuelles Teilungsverhältnis einzustellen, also wieviel Prozent der in den schaltbaren Strahlteiler eingekoppelten Lichtleistung aus dem jeweiligen Ausgang des schaltbaren Strahlteilers austritt. Damit kann für jeden Ausgang der Strahlteileranordnung die Sendelichtleistung der Sendelichtstrahlen variiert werden. So können beispielsweise die Randbereiche eines Überwachungsbereichs mit einer höheren Sendelichtleistung abgetastet werden als die mittleren Bereiche.

Die Ansteuerung der schaltbaren Strahlteiler in der Strahlteileranordnung kann auch in Abhängigkeit von Auswertungsergebnissen der Steuer- und Auswertungseinheit erfolgen. Detektiert die Steuer- und Auswertungseinheit beispielsweise ein Objekt im Überwachungsbereich, können die Teilungsverhältnisse der schaltbaren Strahlteiler so eingestellt werden, dass die Sendelichtleistung im Objektbereich erhöht wird, um eine genauere Positionsbestimmung zu ermöglichen.

Die Ausgänge der Strahlteileranordnung können sequentiell aktiviert und deaktiviert werden. Der Überwachungsbereich kann dann wie mit einen optischen Scanner linien- oder rasterförmig abgetastet werden.

Die schaltbaren Strahlteiler können auch so angesteuert werden, dass der Überwachungsbereich zunächst mit einer geringen Auflösung abgetastet wird, beispielsweise indem nur jeder zweite Ausgang der Strahlteileranordnung aktiviert wird und Sendelichtstrahlen aussendet. Bei Detektion eines Objekts durch die Steuer- und Auswertungseinheit kann dann bei Bedarf die Auflösung im Objektbereich erhöht werden.

Den Ausgängen der Strahlteileranordnung kann eine Sendeoptik nachgeordnet sein, wobei für jeden Ausgang eine eigene Sendeoptik verwendet werden kann, oder eine gemeinsame Sendeoptik für Gruppen oder sämtliche Ausgänge der Strahlteileranordnung.

Bei einer eindimensionalen linienförmigen Anordnung der Ausgänge der Strahlteileranordnung kann den Ausgängen zusätzlich ein diffraktives optisches Element nachgeordnet sein, das je einen Ausgangsstrahl nochmals in eine definierte Anzahl von Sendelichtstrahlen aufteilt. Mit einer derartigen Anordnung lässt sich mit einer eindimensionalen Anordnung von Strahlteilerausgängen ein zweidimensionales Scanfeld abtasten, wobei jeweils eine Linie von Sendelichtstrahlen gleichzeitig aktiviert werden kann.

Zur Detektion der von Objekten aus dem Überwachungsbereich remittierten Lichtstrahlen kann ein ortsauflösender Flächendetektor vorgesehen sein, bevorzugt eine Matrix aus Photodioden oder APDs (Avalanche Photo Diode), oder auch ein Bildsensor mit entsprechend zugeordneten Einzelpixeln oder Pixelgruppen. Eine weitere denkbare Ausführungsform sieht einen SPAD-Empfänger (Single-Photon Avalanche Diode) mit einer Vielzahl von SPADs vor.

Die Steuer- und Auswertungseinheit kann mit der Lichtquelle, der Strahlteileranordnung und dem Detektor verbunden sein und ist bevorzugt dafür ausgebildet, mit einem bekannten Phasen- oder Pulsverfahren die Lichtlaufzeit zwischen Aussenden der Lichtstrahlen und Empfangen der remittierten Lichtstrahlen zu messen und damit einen Abstand eines Objekts im Überwachungsbereich zu bestimmen. Der Sensor wird dadurch entfernungsmessend. Alternativ kann lediglich die Anwesenheit eines Objekts festgestellt und beispielsweise als Schaltsignal ausgegeben werden.

Zur Unterdrückung von Stör- oder Fremdlicht kann der Detektor mit der Abtastung des Überwachungsbereichs synchronisiert sein. So können beispielsweise nur die Empfänger- oder Pixelgruppen des Detektors aktiviert werden, die aus den von den aktivierten Strahlteilerausgängen abgetasteten Bereichen des Überwachungsbereichs remittiertes Licht empfangen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines optoelektronischen Sensors
- Fig. 2: eine schematische Darstellung einer Strahlteileranordnung
- Fig. 3a: ein Ansteuerungsbeispiel für eine Strahlteileranordnung mit gleichmäßiger Verteilung der Sendelichtleistung auf alle Ausgänge
- Fig. 3b: ein Ansteuerungsbeispiel für eine Strahlteileranordnung mit variablerer Verteilung der Sendelichtleistung
- Fig. 4a-4c: ein Ansteuerungsbeispiel für eine Strahlteileranordnung zum Scannen eines Überwachungsbereiches
- Fig. 5a: Ein Beispiel für eine Strahlteileranordnung mit linear angeordneten Ausgängen
- Fig. 5b: Ein Beispiel für eine Strahlteileranordnung mit in einer zweidimensionalen Matrix angeordneten Ausgängen
- Fig. 6: Eine Strahlteileranordnung mit nachgeordnetem diffraktiven optischen Element zur weiteren Strahlaufteilung

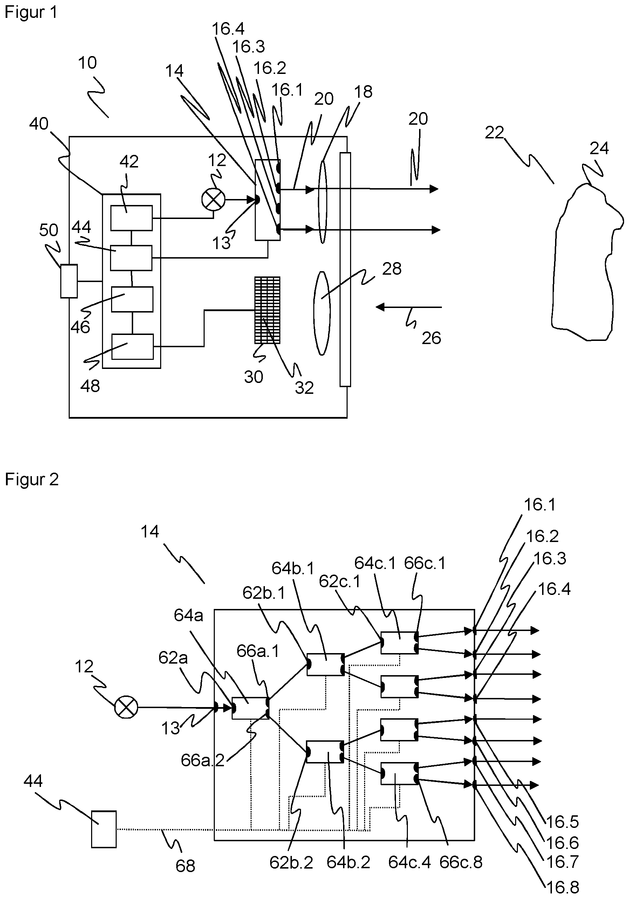

Figur 1 zeigt eine schematische Darstellung eines optoelektronischen Sensors 10 in einer Ausführungsform als mehrstrahliger Entfernungstaster. Der Sensor 10 weist eine Lichtquelle 12 auf, beispielsweise eine Laserdiode, deren Sendelicht in einen Eingang 13 einer Strahlteileranordnung 14 mit mehreren Ausgängen 16.1, 16.2, 16.3, 16.4 eingekoppelt wird. Die Strahlteileranordnung 14 kann eine Vielzahl von schaltbaren Strahlteilern (nicht gezeigt) aufweisen, die das Sendelicht auf einen oder mehrere der Ausgängen 16.1, 16.2, 16.3, 16.4 aufteilen können. Das aus den Ausgängen 16.1, 16.2, 16.3, 16.4 austretende Sendelicht kann mit einer Sendeoptik 18 kollimiert und als Sendelichtstrahl 20 in einen Überwachungsbereich 22 projiziert werden. Das an einem Objekt 24 in dem Überwachungsbereich 22 remittierte Licht wird als Empfangslicht 26 über eine Empfangsoptik 28 auf einen Lichtempfänger 30 geleitet.

Der Lichtempfänger 30 ist als Matrix einer eine Vielzahl von Lichtempfangselementen 32 ausgebildet, bevorzugt als Matrix aus Photodioden, APDs (Avalanche Photo Diode), oder SPAD-Empfängern (Single-Photon Avalanche Diode) oder auch als Bildsensor mit entsprechend zugeordneten Einzelpixeln oder Pixelgruppen.

In dem Sensor 10 ist weiterhin eine Steuer- und Auswertungseinheit 40 vorgesehen, die mit der Lichtquelle 12 und dem Lichtempfänger 30 verbunden ist. Die Steuer- und Auswerteeinheit 40 umfasst eine Lichtquellensteuerung 42, eine Strahlteilersteuerung 44, eine Lichtlaufzeitmesseinheit 46, und eine Objektentfernungsschätzeinheit 48, wobei dies zunächst nur funktionale Blöcke sind, die auch in gleicher Hardware oder in anderen funktionalen Einheiten wie in der Lichtquelle 12, in der Strahlteileranordnung 14 oder im Lichtempfänger 30 implementiert sein können. Über eine Schnittstelle 50 kann die Steuer- und Auswertungseinheit 40 Messdaten ausgeben beziehungsweise umgekehrt Steuer- und Parametrieranweisungen entgegennehmen. Die Steuer- und Auswertungseinheit 40 kann auch in Form von lokalen Auswertungsstrukturen auf einem Chip des Lichtempfängers 30 angeordnet sein oder als Teilimplementierung mit den Funktionen einer zentralen Auswertungseinheit (nicht gezeigt) zusammenwirken.

Die Funktion der Strahlteileranordnung 14 aus Figur 1 soll nun anhand einer beispielhaften Strahlteileranordnung mit einem Eingang und acht Ausgängen erläutert werden.

Figur 2 zeigt eine Strahlteileranordnung 14 mit sieben schaltbaren Strahlteilern 64a, 64b.1, 64b.2, 64c.1, 64c.2, 64c.3, 64c.4, die in drei Ebenen kaskadiert angeordnet sind.

Die erste Ebene weist einen schaltbaren Strahlteiler 64a mit einem Eingang 62a sowie zwei Ausgängen 66a.1, 66a.2 auf. Die zweite Ebene weist zwei schaltbare Strahlteiler 64b.1, 64b.2 mit je einem Eingang 62b.1, 62b.2 sowie je zwei Ausgängen 66b.1, 66b.2, 66b.3, 66b.4 auf. Die dritte Ebene weist vier schaltbare Strahlteiler 64c.1, 64c.2, 64c.3, 64c.4 mit je einem Eingang 62c.1, 62c.2, 62c.3, 62c.4 sowie je zwei Ausgängen 66c.1, 66c.2, 66c.3, 66c.4, 66c.5, 66c.6, 66c.7, 66c.8 auf.

Sendelicht aus der Lichtquelle 12 kann über den Eingang 13 der Strahlteileranordnung 14 in den Strahleingang 62a des ersten schaltbaren Strahlteilers 64a eingekoppelt werden. Der Strahlteiler 64a weist zwei Ausgänge 66a.1, 66a.2 auf, aus denen das Sendelicht in den Eingang 62b.1 des Strahlteilers 64b.1 und/oder den Eingang 62b.2 des Stahlteilers 64b.2 der zweiten Ebene eingekoppelt werden kann. Aus dem Strahlteiler 64b.1 kann das Sendelicht über den Ausgang 66b.1 in den Eingang 62c.1 des Strahlteilers 64c.1 und/oder über den Ausgang 66b.2 in den Eingang 62c.2 des Stahlteilers 64c.2 der dritten Ebene eingekoppelt werden.

Aus dem Strahlteiler 64b.2 kann das Sendelicht über den Ausgang 66b.3 in den Eingang 62c.3 des Strahlteilers 64c.3 und/oder über den Ausgang 66b.4 in den Eingang 62c.4 des Stahlteilers 64c.4 der dritten Ebene eingekoppelt werden.

Aus den Ausgängen 66c.1, 66c.2, 66c.3, 66c.4, 66c.5, 66c.6, 66c.7, 66c.8 der schaltbaren Strahlteiler 64c.1, 64c.2, 64c.3, 64c.4 der dritten Ebene kann das Sendelicht über die Ausgänge 16.1, 16.2, 16.3, 16.4, 16.5, 16.6, 16.7, 16.8 aus der Strahlteileranordnung 14 ausgekoppelt werden.

Die Ausgänge 16.1, 16.2, 16.3, 16.4, 16.5, 16.6, 16.7, 16.8 der Strahlteileranordnung 14 können als Gitterkoppler ausgeführt sein. Die Baugröße eines Gitterkoppler-Ausgangs beträgt ja nach Typ zwischen 10µm und 25 µm. Die eines Gitterkoppler-Ausgänge lassen sich mit sehr geringen Abständen von typischerweise 5µm nebeneinander platzieren. Für eine Strahlteileranordnung 14 mit einer eindimensionalen linearen Anordnung von 240 Ausgängen ergibt sich damit eine Länge von 3,6mm (Gitterkoppler-Ausgang mit 10µm Baugröße und Abstand von 5µm zum nächsten Ausgang) bis 7,2 mm (Gitterkoppler-Ausgang mit 25µm Baugröße und Abstand von 10 µm zum nächsten Ausgang).

Die schaltbaren Strahlteiler 62a, 62b.1, 62b.2,62c.1, 62c.2, 62c.3, 62c.4 sind über eine kabelgebundene oder kabellose (beispielwiese Funk) Verbindung 68 mit der Strahlteilersteuerung 44 verbunden. Mit der Strahlteilersteuerung 44 kann das Teilungsverhältnis für einzelne oder Gruppen von schaltbaren Strahlteilern eingestellt werden. Bevorzugt lässt sich für jeden schaltbaren Strahlteiler das Teilungsverhältnis individuell einstellen.

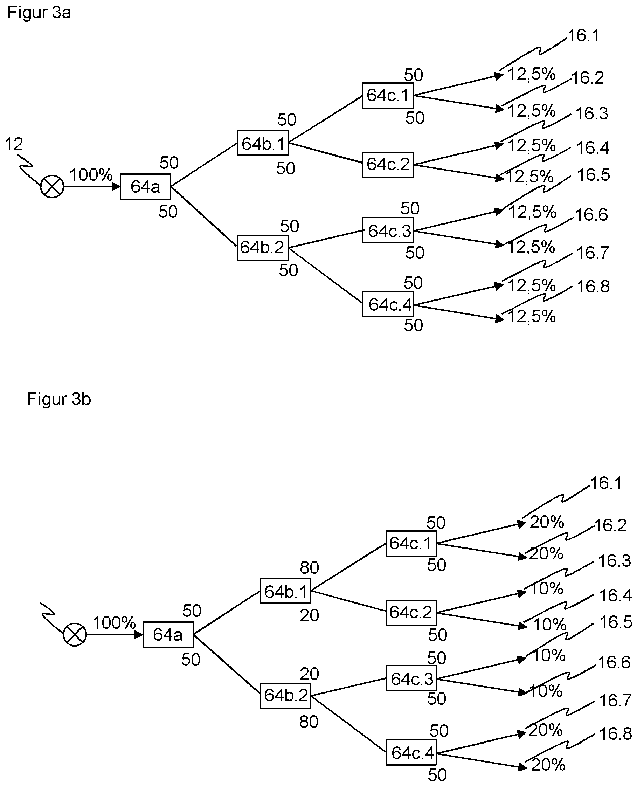

Figur 3a zeigt eine beispielhafte Einstellung der schaltbaren Strahlteiler 62a, 62b.1, 62b.2,62c.1, 62c.2, 62c.3, 62c.4, wobei für alle Strahlteiler ein Teilungsverhältnis der Strahlteilerausgänge von 50/50 eingestellt ist. Bei 100% Eingangsleistung des Sendelichts aus der Lichtquelle 12 liegt somit an jedem Ausgang eine Leistung von 12,5% der Eingangsleistung vor, wobei bei dieser und den folgenden beispielhaften Darstellungen Kopplungsverluste unberücksichtigt bleiben. Mit dieser Einstellung könnte also ein Überwachungsbereich großflächig simultan abgetastet werden.

Figur 3b zeigt eine weitere beispielhafte Einstellung, wobei für die Strahlteiler der ersten Ebene 64a und der dritten Ebene 62c.1, 62c.2, 62c.3, 62c.4, ein Teilungsverhältnis der Strahlteilerausgänge von 50/50, für den ersten Strahlteiler der zweiten Ebene 62b.1ein Teilungsverhältnis der Strahlteilerausgänge von 80/20 und für den zweiten Strahlteiler der zweiten Ebene 62b.2 ein Teilungsverhältnis der Strahlteilerausgänge von 20/80 eingestellt ist. Dadurch werden die äußeren Ausgänge 16.1, 16.2, 16.7,16.8 der Strahlteileranordnung 14 mit einer Leistung von 20% der Eingangsleistung beaufschlagt als die inneren Ausgänge 16.3, 16.4, 16.5, 16.6, die mit einer Leistung von 10% der Eingangsleistung beaufschlagt werden. Damit ließe sich der Randbereich eines Überwachungsbereichs mit höherer Leistung abtasten als das Zentrum.

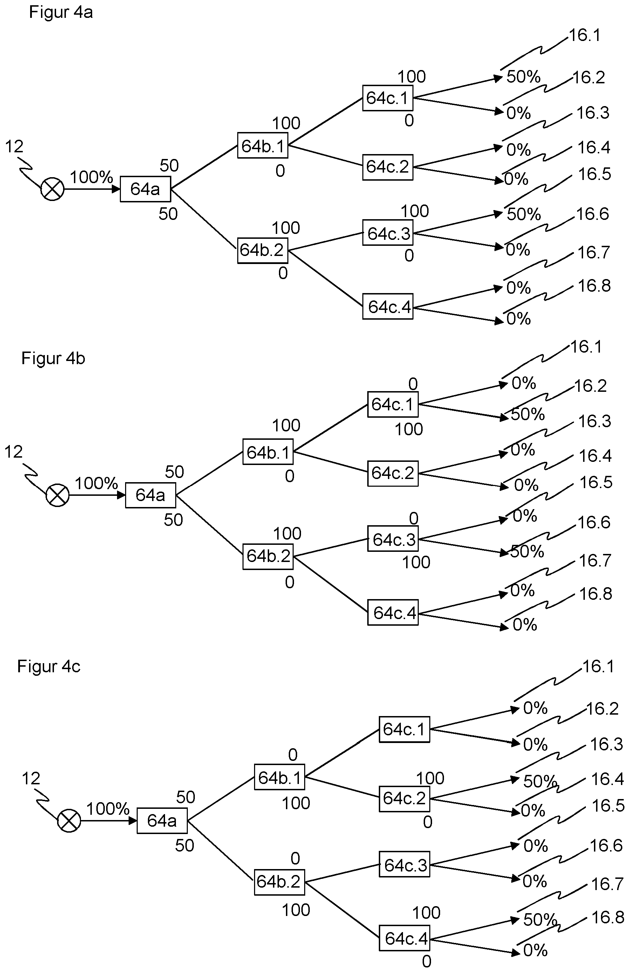

Die schaltbaren Strahlteiler können auch dynamisch angesteuert werden, so das ein Abtasten des Überwachungsbereichs mit Sendelichtstrahlen höherer Leistung möglich ist. Dazu können einzelne schaltbare Strahlteiler mit einem Teilungsverhältnis von 100/0 betrieben werden, wie dies in der Figur 4a und 4b beispielhaft beschrieben ist.

Figur 4a zeigt die Einstellung der schaltbare Strahlteiler zu Beginn eines Scanvorgangs, bei dem der Überwachungsbereich mit 2 Sendelichtstrahlen abgetastet wird. Dazu teilt der schaltbare Strahlteiler das Sendelicht zunächst mit einem Teilungsverhältnis von 50/50 auf. Die schaltbaren Strahlteiler der zweiten Ebene 64b.1, 64b.2 sowie die schaltbaren Strahlteiler 64c.1 und 64c.3 der dritten Eben werden mit einem Teilungsverhältnis von 100/0 betrieben, so dass nur die Ausgänge 16.1 und 16.5 der Strahlteileranordnung mit jeweils 50% der Eingangsleistung beaufschlagt werden. Eine Ansteuerung der schaltbaren Strahlteiler 64c.2 und 64c.4 der dritten Ebene ist nicht erforderlich, da diese nicht mit Sendelicht beaufschlagt werden.

Im nächsten, in Figur 4b gezeigten Schritt wird das Teilungsverhältnis der schaltbaren Strahlteiler 64c.1 und 64c.3 der dritten Ebene auf 0/100 geschaltet, so dass nur die Ausgänge 16.2 und 16.6 der Strahlteileranordnung mit jeweils 50% der Eingangsleistung beaufschlagt werden.

In Figur 4c ist der nächste Schritt des Scanvorgangs gezeigt, in dem das Teilungsverhältnis der schaltbaren Strahlteiler der zweiten Ebene 64b.1, 64b.2 auf 0/100 geschaltet wird, so dass nun die Strahlteiler 64c.2 und 64c.4 der dritten Ebene mit Sendelicht beaufschlagt werden, wobei für die Strahlteiler 64c.2 und 64c.4 jeweils ein Teilungsverhältnis von 100/0 eingestellt wird, so dass nur die Ausgänge 16.3 und 16.7 der Strahlteileranordnung mit jeweils 50% der Eingangsleistung beaufschlagt werden

Im Folgenden (nicht gezeigten) Schritt wird dann das Teilungsverhältnis der schaltbaren Strahlteiler 64c.2und 64c.4 der dritten Ebene auf 0/100 geschaltet, so dass nur die Ausgänge 16.4 und 16.8 der Strahlteileranordnung mit jeweils 50% der Eingangsleistung beaufschlagt werden. Damit wurde der Überwachungsbereich mit zwei Sendelichtstrahlen abgetastet und der Scanvorgang kann mit der in Figur 4a gezeigten Konfiguration von neuem beginnen.

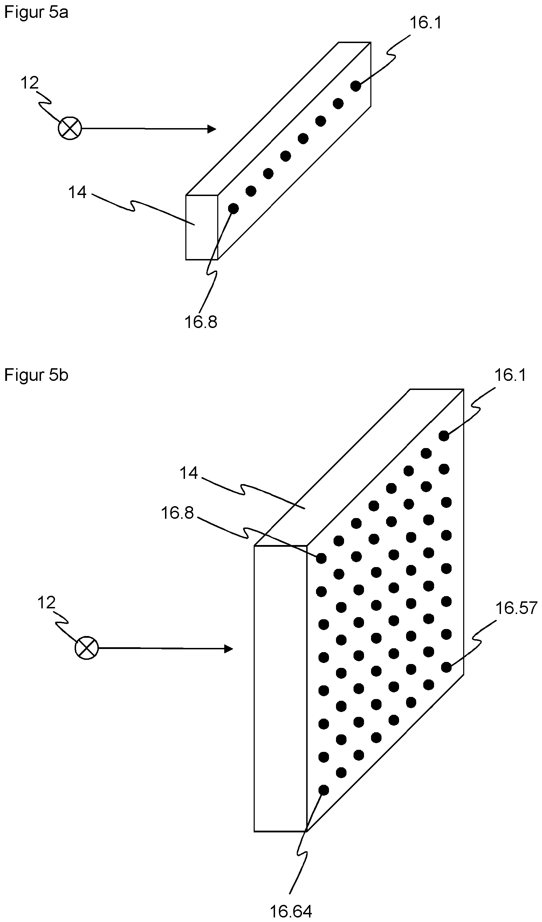

Die Figuren 5a und 5b zeigen mögliche geometrische Anordnungen der Ausgänge 16 einer Strahlteileranordnung 14. Die Ausgänge können beispielsweise wie in Figur 5a gezeigt linear angeordnet sein (eindimensionale Anordnung) oder in Form einer zweidimensionalen Matrix, in Figur 5b beispielhaft als quadratische Matrix mit 64 mal 64 Ausgängen 16.1 bis 16.64 dargestellt. Andere Anordnungsmöglichkeiten wie eine kreisförmige Anordnung der Ausgänge sind ebenfalls möglich.

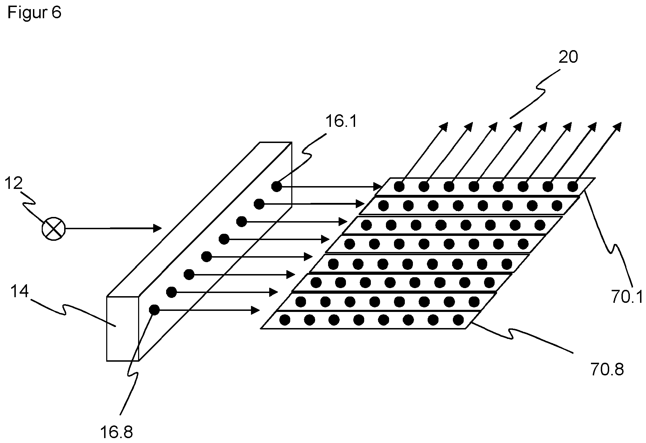

Figur 6 zeigt eine Strahlteileranordnung 14 mit einer eindimensionalen linearen Anordnung von Ausgängen 16.1, 16.8, wobei jedem Ausgang ein statischer Strahlteiler 70.1, 70.8 nachgeordnet ist, der das aus den Ausgängen 16.1, 16.8 der Strahlteileranordnung 14 austretende Sendelicht in je acht Sendelichtstrahlen 20 aufteilt. Auch hier ist die Aufteilung in 8 Sendelichtstrahlen rein beispielhaft zu verstehen. Die statischen Strahlteiler 70.1, 70.8 können als diffraktives optisches Element ausgeführt sein, zur Auskopplung des Sendelichts aus dem statischen Strahlteiler 70.1, 70.8 können diese Gitterkoppler (nicht gezeigt) aufweisen. Die Strahlteileranordnung 14, die statischen Strahlteiler 70.1, 70.8 und die Gitterkoppler können als integrierte Optik ausgeführt sein. Die Baugröße eines Gitterkoppler-Ausgangs beträgt ja nach Typ zwischen 10µm und 25 µm. Die Gitterkoppler-Ausgänge lassen sich mit sehr geringen Abständen von typischerweise 5µm nebeneinander platzieren. Für eine Strahlteileranordnung 14 mit einer eindimensionalen linearen Anordnung von 240 Ausgängen ergibt sich damit eine Länge von 3,6mm (Gitterkoppler-Ausgang mit 10µm Baugröße und Abstand von 5µm zum nächsten Ausgang) bis 7,2 mm (Gitterkoppler-Ausgang mit 25µm Baugröße und Abstand von 10 µm zum nächsten Ausgang).

## Patentansprüche

1. Optoelektronischer Sensor (10) zur Erfassung eines Objekts (24) in einem Überwachungsbereich (22) mit wenigstens einer Lichtquelle (12) zum Aussenden von Sendelicht, einer der Lichtquelle (12) nachgeordneten Strahlteileranordnung (14) zum Aufteilen des Sendelichts in mehrere voneinander separierte, beim Auftreffen auf ein Objekt im Überwachungsbereich vereinzelte, voneinander beabstandete Lichtflecken erzeugende Sendelichtstrahlen (20), einer Sendeoptik (18) zum Projizieren der Sendelichtstrahlen (20) in den Überwachungsbereich, einem Lichtempfänger (30) mit vorgeordneter Empfangsoptik (28) zum Erzeugen von Empfangssignalen aus an dem Objekt remittierten Lichtstrahlen (26) und einer Steuer- und Auswertungseinheit (40) zur Gewinnung von Informationen über das Objekt aus den Empfangssignalen, die dafür ausgebildet ist, aus einer Lichtlaufzeit zwischen Aussenden der Sendelichtstrahlen (20) und Empfangen der remittierten Lichtstrahlen (30) einen Abstand des Objekts zu bestimmen,
wobei die Strahlteileranordnung (14) wenigstens einen Eingang (13) zum Empfangen des Sendelichts von der Lichtquelle (12), eine Vielzahl von Ausgängen (16.1, 16.2, 16.3, 16.4, 16.5, 16.6, 16.7, 16.8) zum Aussenden der Sendelichtstrahlen (20), mehrere schaltbare Strahlteiler (64a, 64b.1, 64b.2, 64c.1, 64c.2, 64c.3, 64c.4) zum Aufteilen des Sendelichts auf die Ausgänge (66c.1, 66c.2, 66c.3, 66c.4, 66c.5, 66c.6, 66c.7, 66c.8), sowie eine Strahlteilersteuerung (44) zum Ansteuern der schaltbaren Strahlteiler (64a, 64b.1, 64b.2, 64c.1, 64c.2, 64c.3, 64c.4) aufweist,
wobei die schaltbaren Strahlteiler (64a, 64b.1, 64b.2, 64c.1, 64c.2, 64c.3, 64c.4) zum gleichzeitigen Aufteilen des Sendelichts auf mindestens zwei Ausgänge (16.1, 16.2, 16.3, 16.4, 16.5, 16.6, 16.7, 16.8) der Strahlteileranordnung (14) eingerichtet sind, und wobei die schaltbaren Strahlteiler (64a, 64b.1, 64b.2, 64c.1, 64c.2, 64c.3, 64c.4) als integrierte schaltbare Wellenleiterkoppler ausgeführt sind,
**dadurch gekennzeichnet, dass**
das Ansteuern der schaltbaren Strahlteiler (64a, 64b.1, 64b.2, 64c.1, 64c.2, 64c.3, 64c.4) die Einstellung von Teilungsverhältnissen der schaltbaren Strahlteiler (64a, 64b.1, 64b.2, 64c.1, 64c.2, 64c.3, 64c.4) beinhaltet.

2. Optoelektronischer Sensor (10) nach Anspruch 1, wobei die Ausgänge (16.1, 16.2, 16.3, 16.4, 16.5, 16.6, 16.7, 16.8) der Strahlteileranordnung (14) linear angeordnet sind.

3. Optoelektronischer Sensor (10) nach Anspruch 2, wobei den Ausgängen (16.1, 16.2, 16.3, 16.4, 16.5, 16.6, 16.7, 16.8) der Strahlteileranordnung (14) mindestens ein diffraktives Element (70.1, 70.8) zum Aufteilen des Sendelichts nachgeordnet ist.

4. Optoelektronischer Sensor (10) nach Anspruch 1, wobei die Ausgänge (16.1, 16.2, 16.3, 16.4, 16.5, 16.6, 16.7, 16.8) der Strahlteileranordnung in einer zweidimensionalen Matrix angeordnet sind.

5. Optoelektronischer Sensor (10) nach einem der vorhergehenden Ansprüche, wobei die Ausgänge (16.1, 16.2, 16.3, 16.4, 16.5, 16.6, 16.7, 16.8) der Strahlteileranordnung jeweils ein Sichtfeld von höchstens zwei Grad, bevorzugt von höchstens einem Grad, besonders bevorzugt von höchstens 0,25 Grad aufweisen.

6. Optoelektronischer Sensor (10) nach einem der vorhergehenden Ansprüche, wobei die Strahlteilersteuerung (44) die schaltbaren Strahlteiler (64a, 64b.1, 64b.2, 64c.1, 64c.2, 64c.3, 64c.4) einzeln ansteuert.

7. Optoelektronischer Sensor (10) nach einem der vorhergehenden Ansprüche, wobei die Strahlteilersteuerung (44) die schaltbaren Strahlteiler (64a, 64b.1, 64b.2, 64c.1, 64c.2, 64c.3, 64c.4) in Abhängigkeit eines Signals der Steuer- und Auswertungseinheit (40) ansteuert.

8. Optoelektronischer Sensor (10) nach einem der vorhergehenden Ansprüche, wobei die Strahlteileranordnung (14) als integrierte Optik ausgelegt ist

9. Optoelektronischer Sensor (10) nach Anspruch 8, wobei die Strahlteileranordnung einen Gitterkoppler zum Auskoppeln des Sendelichts aufweist.

10. Verfahren zum Erfassen eines Objekts in einem Überwachungsbereich, mit den Schritten:
- Aussenden von Sendelicht mit einer Lichtquelle (12),
- Empfangen des Sendelichts in einer Strahlteileranordnung (14)
- Steuern von schaltbaren Strahlteilern (64a, 64b.1, 64b.2, 64c.1, 64c.2, 64c.3, 64c.4) der Strahlteileranordnung (14) mit einer Strahlteilersteuerung (44), wobei die schaltbaren Strahlteiler (64a, 64b.1, 64b.2, 64c.1, 64c.2, 64c.3, 64c.4) als integrierte schaltbare Wellenleiterkoppler ausgeführt sind
- Erzeugen von voneinander separierten, beim Auftreffen auf ein Objekt im Überwachungsbereich vereinzelte, voneinander beabstandete Lichtflecken erzeugende Sendelichtstrahlen (20) durch Aufteilen des Sendelichts auf mindestens zwei Ausgänge (16.1, 16.2, 16.3, 16.4, 16.5, 16.6, 16.7, 16.8) der Strahlteileranordnung (14)
- Projizieren der Sendelichtstrahlen (20) mittels einer Sendeoptik (18) in den Überwachungsbereich
- Empfangen von an dem Objekt remittierten Lichtstrahlen (26) mittels eines Lichtempfängers (30) mit vorgeordneter Empfangsoptik (28)
- Messen einer Lichtlaufzeit zwischen Aussenden der Sendelichtstrahlen (20) und Empfangen der remittierten Lichtstrahlen (26)
- Bestimmen eines Abstands des Objekts aus der Lichtlaufzeit, **dadurch gekennzeichnet, dass** das Steuern der schaltbaren Strahlteiler (64a, 64b.1, 64b.2, 64c.1, 64c.2, 64c.3, 64c.4) die Einstellung von Teilungsverhältnissen der schaltbaren Strahlteiler (64a, 64b.1, 64b.2, 64c.1, 64c.2, 64c.3, 64c.4) beinhaltet.

## Claims

1. Optoelectronic sensor (10) for detecting an object (24) in a monitoring area (22) with at least one light source (12) for emitting transmitted light, a beam splitter arrangement (14) arranged downstream of the light source (12) for splitting the transmitted light into a plurality of transmitted light beams (20) which are separated from one another and produce isolated, spaced-apart light spots when they strike an object in the monitored area, a transmitting optical system (18) for projecting the transmitted light beams (20) into the monitored area, a light receiver (30) with upstream receiving optics (28) for generating received signals from light beams (26) remitted from the object, and a control and evaluation unit (40) for obtaining information about the object from the received signals, which is designed for this purpose, determining a distance of the object from a light propagation time between emission of the transmitted light beams (20) and reception of the remitted light beams (30),
wherein the beam splitter arrangement (14) has at least one input (13) for receiving the transmitted light from the light source (12), a plurality of outputs (16.1, 16.2, 16.3, 16.4, 16.5, 16.6, 16.7, 16.8) for emitting the transmitted light beams (20), a plurality of switchable beam splitters (64a, 64b.1, 64b.2, 64c.1, 64c.2, 64c.3, 64c.4) for distributing the transmitted light to the outputs (66c.1, 66c.2, 66c.3, 66c.4, 66c.5, 66c.6, 66c.7, 66c.8) and a beam splitter controller (44) for controlling the switchable beam splitters (64a, 64b.1, 64b.2, 64c.1, 64c.2, 64c.3, 64c.4),
wherein the switchable beam splitters (64a, 64b.1, 64b.2, 64c.1, 64c.2, 64c.3, 64c.4) are set up for simultaneous splitting of the transmitted light to at least two outputs (16.1, 16.2, 16.3, 16.4, 16.5, 16.6, 16.7, 16.8) of the beam splitter arrangement (14) , and wherein the switchable beam splitters (64a, 64b.1, 64b.2, 64c.1, 64c.2, 64c.3, 64c.4) are designed as integrated switchable waveguide couplers,
**characterized in that**
the actuation of the switchable beam splitters (64a, 64b.1, 64b.2, 64c.1, 64c.2, 64c.3, 64c.4) includes the setting of splitting ratios of the switchable beam splitters (64a, 64b.1, 64b.2, 64c.1, 64c.2, 64c.3, 64c.4).

2. Optoelectronic sensor (10) according to claim1, wherein the outputs (16.1, 16.2, 16.3, 16.4, 16.5, 16.6, 16.7, 16.8) of the beam splitter arrangement (14) are arranged linearly.

3. Optoelectronic sensor (10) according to claim 2, wherein at least one diffractive element (70.1, 70.8) for splitting the transmitted light is arranged downstream of the outputs (16.1, 16.2, 16.3, 16.4, 16.5, 16.6, 16.7, 16.8) of the beam splitter arrangement (14).

4. Optoelectronic sensor (10) according to claim1, wherein the outputs (16.1, 16.2, 16.3, 16.4, 16.5, 16.6, 16.7, 16.8) of the beam splitter arrangement are arranged in a two-dimensional matrix.

5. Optoelectronic sensor (10) according to one of the preceding claims, wherein the outputs (16.1, 16.2, 16.3, 16.4, 16.5, 16.6, 16.7, 16.8) of the beam splitter arrangement each have a field of view of at most two degrees, preferably of at most one degree, particularly preferably of at most 0.25 degrees.

6. Optoelectronic sensor (10) according to one of the preceding claims, wherein the beam splitter controller (44) individually controls the switchable beam splitters (64a, 64b.1, 64b.2, 64c.1, 64c.2, 64c.3, 64c.4).

7. Optoelectronic sensor (10) according to one of the preceding claims, wherein the beam splitter controller (44) controls the switchable beam splitters (64a, 64b.1, 64b.2, 64c.1, 64c.2, 64c.3, 64c.4) as a function of a signal from the control and evaluation unit (40).

8. Optoelectronic sensor (10) according to one of the preceding claims, wherein the beam splitter arrangement (14) is designed as integrated optics.

9. Optoelectronic sensor (10) according to claim 8, wherein the beam splitter arrangement has a grating coupler for coupling out the transmitted light.

10. A method of detecting an object in a surveillance area, comprising the steps of:
- Emitting transmitted light with a light source (12),
- Receiving the transmitted light in a beam splitter arrangement (14)
- Controlling switchable beam splitters (64a, 64b.1, 64b.2, 64c.1, 64c.2, 64c.3, 64c.4) of the beam splitter arrangement (14) with a beam splitter controller (44), wherein the switchable beam splitters (64a, 64b.1, 64b.2, 64c.1, 64c.2, 64c.3, 64c.4) are designed as integrated switchable waveguide couplers
- Generating transmitted light beams (20) which are separated from one another and produce isolated, spaced-apart light spots when they strike an object in the monitored area by splitting the transmitted light to at least two outputs (16.1, 16.2, 16.3, 16.4, 16.5, 16.6, 16.7, 16.8) of the beam splitter arrangement (14)
- Projecting the transmitted light beams (20) into the monitoring area by means of a transmitting optic (18)
- Receiving light beams (26) remitted at the object by means of a light receiver (30) with upstream receiving optics (28)
- Measuring a light propagation time between emission of the transmitted light beams (20) and reception of the remitted light beams (26)
- Determining a distance of the object from the light propagation time, **characterized in that** the control of the switchable beam splitters (64a, 64b.1, 64b.2, 64c.1, 64c.2, 64c.3, 64c.4) includes the setting of splitting ratios of the switchable beam splitters (64a, 64b.1, 64b.2, 64c.1, 64c.2, 64c.3, 64c.4).

## Revendications

1. Capteur optoélectronique (10) pour la détection d'un objet (24) dans une zone de surveillance (22) avec au moins une source lumineuse (12) pour l'émission de lumière d'émission, un dispositif de division de faisceau (14) disposé en aval de la source lumineuse (12) pour la division de la lumière d'émission en plusieurs faisceaux lumineux d'émission (20) séparés les uns des autres et produisant des taches lumineuses espacées les unes des autres lors de l'incidence sur un objet dans la zone de surveillance, une optique d'émission (18) pour projeter les faisceaux lumineux d'émission (20) dans la zone de surveillance, un récepteur de lumière (30) avec une optique de réception (28) placée en amont pour générer des signaux de réception à partir des faisceaux lumineux réémis (26) par l'objet et une unité de commande et d'évaluation (40) pour obtenir des informations sur l'objet à partir des signaux de réception, qui est conçue pour déterminer une distance de l'objet à partir d'un temps de parcours de la lumière entre l'émission des faisceaux lumineux d'émission (20) et la réception des faisceaux lumineux renvoyés (30),
le dispositif de division de faisceau (14) comportant au moins une entrée (13) pour recevoir la lumière d'émission de la source lumineuse (12), une pluralité de sorties (16.1, 16.2, 16.3, 16.4, 16.5, 16.6, 16.7, 16.8) pour émettre les faisceaux lumineux d'émission (20), plusieurs séparateurs de faisceaux commutables (64a, 64b.1, 64b.2, 64c.1, 64c.2, 64c.3, 64c.4) pour répartir la lumière émise entre les sorties (66c.1, 66c.2, 66c.3, 66c.4, 66c.5, 66c.6, 66c.7, .8), ainsi qu'une commande de diviseur de faisceau (44) pour commander les diviseurs de faisceau commutables (64a, 64b.1, 64b.2, 64c.1, 64c.2, 64c.3, 64c.4),
les diviseurs de faisceau commutables (64a, 64b.1, 64b.2, 64c.1, 64c.2, 64c.3, 64c.4) étant conçus pour répartir simultanément la lumière émise sur au moins deux sorties (16.1, 16.2, 16.3, 16.4, 16.5, 16.6, 16.7, 16.8) du dispositif de division de faisceau (14), et les diviseurs de faisceau commutables (64a, 64b.1, 64b.2, 64c.1, 64c.2, 64c.3, 64c.4) sont réalisés sous forme de coupleurs de guides d'ondes commutables intégrés,
**caractérisé en ce que**
la commande des diviseurs de faisceau commutables (64a, 64b.1, 64b.2, 64c.1, 64c.2, 64c.3, 64c.4) comprend le réglage des rapports de division des diviseurs de faisceau commutables (64a, 64b.1, 64b.2, 64c.1, 64c.2, 64c.3, 64c.4).

2. Capteur optoélectronique (10) selon la revendication1, dans lequel les sorties (16.1, 16.2, 16.3, 16.4, 16.5, 16.6, 16.7, 16.8) du dispositif de division de faisceau (14) sont disposées de manière linéaire.

3. Capteur optoélectronique (10) selon la revendication 2, dans lequel au moins un élément diffractif (70.1, 70.8) destiné à diviser la lumière émise est disposé en aval des sorties (16.1, 16.2, 16.3, 16.4, 16.5, 16.6, 16.7, 16.8) du dispositif de division de faisceau (14).

4. Capteur optoélectronique (10) selon la revendication1, dans lequel les sorties (16.1, 16.2, 16.3, 16.4, 16.5, 16.6, 16.7, 16.8) du dispositif de division de faisceau sont disposées dans une matrice bidimensionnelle.

5. Capteur optoélectronique (10) selon l'une des revendications précédentes, dans lequel les sorties (16.1, 16.2, 16.3, .4, 16.5, 16.6, 16.7, 16.8) du dispositif de division de faisceau présentent chacune un champ de vision au maximum deux degrés, de préférence au maximum un degré, de manière particulièrement préférée au maximum 0,25 degré.

6. Capteur optoélectronique (10) selon l'une des revendications précédentes, dans lequel la commande de diviseur de faisceau (44) commande individuellement les séparateurs de faisceau commutables (64a, 64b.1, 64b.2, 64c.1, 64c.2, 64c.3, 64c.4).

7. Capteur optoélectronique (10) selon l'une des revendications précédentes, dans lequel la commande de diviseur de faisceau (44) commande les diviseurs de faisceau commutables (64a, 64b.1, 64b.2, 64c.1, 64c.2, 64c.3, 64c.4) en fonction d'un signal de l'unité de commande et d'évaluation (40).

8. Capteur optoélectronique (10) selon l'une des revendications précédentes, dans lequel le dispositif de division de faisceau (14) est conçu comme une optique intégrée

9. Capteur optoélectronique (10) selon la revendication 8, dans lequel le dispositif de division de faisceau comporte un coupleur à grille pour le découplage de la lumière d'émission.

10. Procédé de détection d'un objet dans une zone de surveillance, comprenant les étapes suivantes:
- Émission de lumière d'émission avec une source de lumière (12),
- Réception de la lumière émise dans un dispositif de division de faisceau (14)
- Commande de diviseurs de faisceau commutables (64a, 64b.1, 64b.2, 64c.1, 64c.2, 64c.3, 64c.4) de l'agencement du dispositif de division de faisceau (14) avec une commande de diviseurs de faisceau (44), les diviseurs de faisceau commutables (64a, 64b.1, 64b.2, 64c.1, 64c.2, 64c.3, 64c.4) étant réalisés sous forme de coupleurs de guides d'ondes commutables intégrés
- Production de faisceaux lumineux d'émission (20) séparés les uns des autres, produisant des taches lumineuses isolées et espacées les unes des autres lorsqu'elles rencontrent un objet dans la zone de surveillance, par répartition de la lumière d'émission sur au moins deux sorties (16.1, 16.2, 16.3, 16.4, 16.5, .6, 16.7, 16.8) du dispositif de division de faisceau (14)
- Projection des faisceaux lumineux d'émission (20) au moyen d'une optique d'émission (18) dans la zone de surveillance
- Réception des faisceaux lumineux réémis (26) par l'objet au moyen d'un récepteur de lumière (30) avec une optique de réception (28) placée en amont
- Mesure d'un temps de propagation de la lumière entre l'émission des faisceaux lumineux d'émission (20) et la réception des faisceaux lumineux réémis (26)
- Détermination d'une distance de l'objet à partir du temps de propagation de la lumière, **caractérisé en ce que** la commande des diviseurs de faisceau commutables (64a, 64b.1, 64b.2, 64c.1, 64c.2, 64c.3, 64c.4) comprend le réglage de rapports de division des diviseurs de faisceau commutables (64a, 64b.1, 64b.2, 64c.1, 64c.2, 64c.3, 64c.4).
